# EUROPEAN PATENT SPECIFICATION

(11) **EP 2 138 474 B1**
(45) Date of publication and mention of the grant of the patent: **08.08.2018**
(21) Application number: 08104503.1
(22) Date of filing: 23.06.2008
(51) Int. Cl.: C04B 35/567, C04B 35/63, F27D 5/00, B82Y 30/00

(54) **SIC MATERIAL**
SIC-MATERIAL
MATÉRIAU SIC

(43) Date of publication of application: 30.12.2009
(73) Proprietor: Imerys Kiln Furniture Hungary Ltd., 6800 Hódmezövásárhely (HU)
(72) Inventor: Sonntag, Andreas, 83512, Wasserburg (DE); Weber, Monika Josefa, 37671, Höxter (DE); Bonomi, Zlotan Geza, 6800, Hódmezövásárhely (HU)
(74) Representative: Haseltine Lake LLP

(56) References cited:
- EP-A- 1 728 774
- DE-A1- 10 212 607
- JP-A- 8 178 548
- JP-A- 2001 132 933
- US-A- 4 127 629
- US-A- 6 007 883
- US-A1- 2003 148 063

## Description

### Summary of the invention

The invention relates to a new ceramic material based on silicon carbide (SiC), ceramic bodies made from such material, and processes for the manufacture thereof.

### Background of the invention

Silicon carbide (SiC) is one of the most important non-oxide ceramic materials. Its hardness, combined with a high thermal conductivity and high chemical stability (corrosion resistance) make it an attractive material for use in a wide variety of applications. However, the sintering processes for non-oxide ceramic materials can be complicated and expensive. Variations in sintering conditions have a large impact of the final properties of the ceramic material.

SiC ceramics are typically shaped using conventional ceramics shaping techniques such as pressing or casting. After the shaping process the silicon carbide is sintered to form a ceramic body. A wide range of sintering techniques has been developed for silicon carbide.

For example, silicon carbide can be subjected to a recrystallization process via evaporation-condensation of the SiC raw materials at temperatures above 2200°C in an inert (usually argon) atmosphere. This process solidifies the silicon carbide microstructure and results in a material known as recrystallized SiC (RSiC).

Sub-micron SiC powder can also be sintered in the presence of additives based on boron and carbon, or aluminium and carbon. This process is typically performed at a temperature of 1900-2100°C in an inert atmosphere, resulting in a material known as SSiC. These products are characterized by a high content of SiC (usually more than 99 %).

Alternatively, sub-micron SiC powder can be sintered in the presence of additives such as Al₂O₃ and Y₂O₃ in an inert atmosphere at temperature up to 2000°C. In this process, the additives combine with the SiC to form a liquid phase, which accelerates the densification of the material. The resulting material is the so-called liquid phase sintered SiC (LPSSiC).

In yet another process, silicon carbide particles can be bonded by a reaction bonding and infiltration process. In this process the SiC raw materials are mixed with carbon or a carbon precursor, which is then infiltrated during a vacuum infiltration process with metallic silicon. The silicon, which melts at temperatures above 1410°C impregnates the SiC-C body to: (A) react with the carbon to form secondary SiC in the microstructure and (B) to fill up all remaining porosity. This process runs at temperatures between 1650-2000°C. The resultant product is known as reaction bonded silicon infiltrated SiC (SiSiC).

Another option is to produce a shaped SiC body containing additional metallic Silicon, which is then fired in a nitrogen atmosphere at temperatures around 1450-1550°C. The nitrogen reacts with the silicon to form silicon nitride Si₃N₄, which bonds the SiC. The resulting material is known as NSiC.

All of the above described sintering processes require sintering under inert gas or vacuum conditions, which can be relatively expensive.

The non-oxide ceramic materials described above have desirable properties, such as a high modulus of rupture (up to high temperatures), little or no creep at high temperatures under mechanical load, high temperature corrosion resistance in aggressive environments, and high abrasion resistance, which render those products interesting for the field of high temperature applications. However, use of these high performance silicon carbide materials is limited because of their high production costs. High performance SiC materials as described above are sometimes applied as coatings to light weight kiln furniture products to provide increased service life.

On the other hand, it is possible to use conventional ceramic binding agents on the basis of alumina silicate compounds to obtain a so-called KSiC (ceramic-bonded SiC). Here the relatively coarse SiC grain are mixed with aluminosilicates, such as clays or other silicates, and the shaped product is then fired under oxidizing atmosphere in typically gas fired kilns at temperature up to 1400°C. The production costs for aluminosilicate bonded SiC materials are considerably lower than for the high performance SiC described above. However, the material properties such as modulus of rupture or high temperature creep resistance of these materials are relatively poor in comparison to the high performance SiC materials

Ceramic bonded SiC products are widely used as refractory materials and typically must be of higher weight in order to offer sufficient mechanical stability. Ceramic bonded SiC generally cannot be applied as light weight kiln furniture due to its relatively low strength and its inferior high temperature creep properties.

Oxide ceramics based on mullite, cordierite, alumina silicates, or composites thereof are commonly used in high temperature applications due to their relatively low production costs. The firing of oxide ceramics is usually accomplished using gas fired atmospheric kilns in air atmosphere, which is a significantly less costly in comparison to vacuum or inert gas kilns.

Accordingly, due to their lower production cost, and acceptable material properties, oxide ceramics are often used instead of high performance SiC ceramics in applications such as kiln furniture (H-cassette) for the firing of roof tiles, later referred to as a heavy clay product. Cordierite-based H-cassettes have a relatively high weight in order to keep their thermomechanical stability, which leads to a relatively high energy consumption in the firing process. An H-cassette made from a high performance SiC ceramics could be designed with a significantly lower weight. However, the high production cost of high performance SiC usually precludes their use in such applications.

A method for firing light weight, high performance SiC ceramics in gas fired atmospheric kilns in air atmosphere would significantly reduce the production cost and broaden their application fields.

An example of an oxide bonded silicon carbide reportedly suitable for use as kiln furniture is provided in EP1728774A1. The material described in EP1728744A1 comprises a mixture of large aggregates of SiC (50-200 micron) and smaller (sub-10 micron) individual particles of SiC, SiO₂, and oxide-based additives comprising Ti, V, Cr, Mn, Fe, Co, Ni, or Cu. EP1728774A1 refers to V₂O₅ as a preferable sinter additive in addition to SiO₂, however V₂O₆ is highly toxic and thus undesirable for use industrial manufacturing.

Light weight oxide bonded SiC materials such as thin walled plates, batts and other complex shaped kiln furniture to be used in the production ceramic products such as tableware, sanitaryware, heavy clay products and the like have not heretofore been used in consumer ceramic applications. The insufficient oxidation resistance of current oxide bonded SiC materials and with this short service live have limited their successful application as kiln furniture.

### Brief Description of the Invention

As described herein, the present invention relates to a silicon carbide (SiC) ceramic material, characterized in that the ceramic material comprises silicon carbide grains and one or more oxide binding phase(s), wherein the silicon carbide is present in an amount of at least 70 % by weight, preferably at least 80 % by weight, more preferably in a range between 80 and 95 % by weight, based on the total weight of the ceramic material, and wherein the size distribution of the silicon carbide grains is at least bimodal with at least one fraction of small SiC grains and at least one fraction of large SiC grains, wherein the coarse grain SiC portion represents 70% to 40% by weight of the composition. In a further embodiment, the average grain size of the small SiC grains in the ceramic material is in the D50-range between 0.5 micrometers to 6 micrometers, preferably 1.0 to 5.0 µm; more preferably 1.0 to 3.0 µm, where the small SiC grain portion represents 30-60% by weight.

In a further embodiment, the average grain size of the large SiC particles in the ceramic material is in the D50-range between 50 to 800 micrometers, preferably 50 to 100 µm, more preferably 60 to 80 µm or is in the D50-range of preferably 500 to 800 µm; more preferably 600 to 700 µm. The large SiC particles primarily comprise individual, non-aggregated particles having an average grain size as described above. The oxide binding phase(s) of the ceramic material comprise an amount of cristobalite in the range between 5 and 25 % by weight, preferably between 5 and 15 % by weight, based on the total weight of the ceramic material. In a further embodiment, the oxide binding phase(s) of the ceramic material further contain one or more elements selected from the group consisting of aluminum, magnesium, yttrium, and vanadium.

The modulus of rupture (MOR) of the ceramic material can be in the range between 25 to 200 MPa, preferably between 60 to 170 MPa, more preferably between 80 to 150 MPa. The thermal creep resistance of the ceramic material can be in the range between 0.01 to 4 mm, preferably between 0.01 and 1 mm, more preferably between 0.01 and 0.2 mm. The thermal expansion coefficient from RT to 1000°C can be in the range between 4 × 10⁻⁶ K⁻¹ and 6 × 10⁻⁶ K⁻¹.

The present invention further relates to a process for the manufacture of a silicon carbide ceramic material as described above, characterized in that
a) a mixture of silicon carbide particles having an at least bimodal particle size distribution with at least one fraction of small SiC particles and at least one fraction of large SiC particles is provided, wherein the coarse grain SiC portion represents 70% to 40% by weight of the composition.
b) the mixture of step a) is combined with a binding agent comprising of one or more compounds selected from the group of inorganic Vanadium compounds, Yttrium oxide (Y₂O₃), Yttrium alumina compositions, Yttrium Aluminum Garnet (YAG), Yttrium Silicates compositions, Yttrium Alumina Silica compositions, Alumina Silicate compositions, Magnesia Alumina compositions, Magnesia Alumina Spinel compositions, Silica, wherein the binding agents are present in a total amount between 0.1 % by weight and 10 % by weight of the dry composition;
c) the composition is subjected to a forming step to obtain a green ceramic body;
d) the green ceramic body is subjected to a firing cycle comprising a sequence of firing steps, wherein a first firing step is conducted in the presence of an oxygen-containing atmosphere.

In a further embodiment, the firing cycle of the process of the invention comprises two or more firing steps.

In a further embodiment, the atmosphere of the first firing step of the process comprises an amount of gaseous oxygen between 6% and 10 % by volume.

In a further embodiment, the first firing step of the process is performed in the temperature range between room temperature to 1300 °C preferably with an extended oxidation period between 500-1000°C.

The first firing step is followed by a transition period between 1000 - 1300°C, in which the oxygen content of the atmosphere gradually reduced to lead to the second firing step.

In a further embodiment, the second firing step of the process is performed at a temperature in the range between 1000 to 1550 °C preferably 1300 to 1450 °C

In a further embodiment, the atmosphere of the second firing step of the process comprises an amount of gaseous carbon monoxide between 1% and 2,5 % , that is without free oxygen in the atmosphere.

Optionally, the second firing step may be followed a cooling transition period under an oxidizing atmosphere such as ambient air.

The fraction of small SiC particles in the process of the invention can have a d50 value in the range of 1.0 to 5.0 µm; preferably 1.0 to 3.0 µm. The fraction of large SiC particles in the process of the invention can have a d50 value in the range of 50 to 100 µm, preferably 60 to 80 µm; or in the range of 500 to 800 µm, preferably 600 to 700 µm

The present invention further relates to a lightweight kiln furniture for the firing of tableware, sanitary ware, heavy clay products and the like comprising an oxide bonded silicon carbide material, comprising silicon carbide grains and one or more oxide binding phase(s), wherein the silicon carbide is present in an amount of at least 70 % by weight, preferably at least 80 % by weight, more preferably in a range between 80 and 95 % by weight, based on the total weight of the ceramic material, and wherein the size distribution of the silicon carbide grains is at least bimodal with at least one fraction of small SiC grains and at least one fraction of large SiC grains.

The present invention further relates to a process for the manufacture of silicon carbide ceramic kiln furniture for firing of tableware sanitary ware, heavy clay products and the like characterized in that
a) a mixture of silicon carbide particles having an at least bimodal particle size distribution with at least one fraction of small SiC particles and at least one fraction of large SiC particles is provided, wherein the coarse grain SiC portion represents 70% to 40% by weight of the composition.
b) the mixture of step a) is combined with a binding agent comprising one or more compounds selected from the group of inorganic Vanadium compounds, Yttrium oxide (Y₂O₃), Yttrium alumina compositions, Yttrium Aluminum Garnet (YAG), Yttrium Silicates compositions, Yttrium Alumina Silica compositions, Alumina Silicate compositions, Magnesia Alumina compositions, Magnesia Alumina Spinel compositions, Silica, wherein the binding agents are present in a total amount between 0.1 % by weight and 10 % by weight of the dry composition;
c) the composition is subjected to a forming step to obtain a green ceramic kiln furniture body for the firing of tableware, sanitary ware, heavy clay products and the like, said forming step preferably including a casting step;
d) the green ceramic kiln furniture body for the firing of tableware, sanitary ware, heavy clay products and the like is subjected to a firing cycle comprising a sequence of firing steps, wherein a first firing step is conducted in the presence of an oxygen-containing atmosphere.

The present invention further relates to a composite ceramic body comprising an oxide bonded silicon carbide core surrounded by an outer protective layer comprising SiO₂, The oxide bonded silicon carbide core comprises silicon carbide grains and one or more oxide binding phase(s). Preferably, the silicon carbide is present in an amount of at least 70 % by weight, more preferably at least 80 % by weight, and even more preferably in a range between 80 and 95 % by weight, based on the total weight of the ceramic material. The size distribution of the silicon carbide grains is preferably at least bimodal with at least one fraction of small SiC grains and at least one fraction of large SiC grains.

### Brief Description of the Figures

Figure 1 shows a micrograph of a section through sample of a ceramic material according to the present invention at a magnification of 50 fold.
Figure 2 shows a micrograph of a section through a sample of a ceramic material according to the present invention at a magnification of 2500 fold.
Figure 3 shows a micrograph of a section through an edge of a sample of a ceramic material according to the present invention at a magnification of 200 fold.
Figure 4 shows a micrograph of a section through sample of a ceramic material according to the present invention at a magnification of 50 fold.
Figure 5 Figure 2 shows a micrograph of a section through a sample of a ceramic material according to the present invention at a magnification of 2500 fold.
Figure 6 shows a micrograph of a section through an edge of a sample of a ceramic material according to the present invention at a magnification of 200 fold.
Figure 7 shows a micrograph of a section through sample of a ceramic material according to the present invention at a magnification of 50 fold.
Figure 8 Figure 2 shows a micrograph of a section through a sample of a ceramic material according to the present invention at a magnification of 2500 fold.
Figure 9 shows a micrograph of a section through an edge of a sample of a ceramic material according to the present invention at a magnification of 200 fold.
Figure 10 shows a micrograph of a section through sample of a ceramic material according to the present invention at a magnification of 50 fold.
Figure 11 Figure 2 shows a micrograph of a section through a sample of a ceramic material according to the present invention at a magnification of 2500 fold.
Figure 12 shows a micrograph of a section through an edge of a sample of a ceramic material according to the present invention at a magnification of 200 fold.

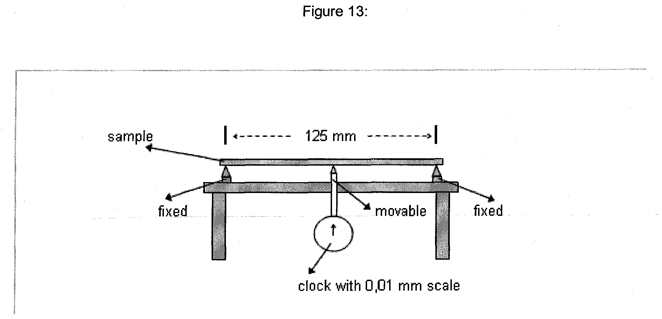

Figure 13 shows the technical equipment for the determination of the high temperature creep resistance of the ceramic materials of the present invention.

### Detailed Description of the Invention

The ceramic SiC materials of the present invention are characterized by an at least bimodal SiC grain size distribution in the final product. The large SiC grains are embedded in an oxide bonding phase, which further includes small SiC grains.

The grain size distribution in the final SiC ceramic product is generated by using SiC particle mixtures with an at least bimodal particle size distribution as the starting material for the preparation of ceramic green bodies. The particle size of the starting material is basically maintained during the sintering process, and consequently, the grain size distribution in the final product is determined to a large extent by the particle size distribution in the starting material.

As used herein and throughout the specification, a bimodal particle size-distribution is defined as a particle size-distribution in which, the derivative of the accumulated particle sizes in % over the total particle range is plotted as a function of particle size, the resulting function exhibits two maxima, also referred to as modes herein.

In one aspect, the present invention provides a new bonding mechanism for SiC using an oxide bond, which is created by a tailored oxidation of the relatively higher specific surface area of the finer portion of the bimodal SiC powder distribution in the raw material mix. The oxidation of the SiC is achieved through a thermal oxidation of the SiC particle surfaces in an atmospheric kiln in an oxygen containing atmosphere, e.g. in a gas fired kiln in air atmosphere. The SiC particle surface oxidation leads to the formation of SiO₂, which is either present as the dominant oxide bonding phase or it is present in the combination with other oxide phases as described in the examples below.

The oxide bond created in this oxidation process can be balanced to be fully sufficient to bond the SiC grains throughout the cross section of the product to result in high mechanical strength, i.e. modulus of rupture (MOR).

After reaching a thorough oxidation of the SiC particle surface to form bonds across particles, the outer surface of the product can be sealed off by a mainly amorphous SiO₂ layer to prevent further oxidation of the SiC grain surface beyond the desired degree. This is achievable by applying a distinct firing cycle to the shaped SiC product comprising two steps. First the product is heated to a relatively lower temperature that is high enough to oxidize the fine SiC particle surfaces throughout the product cross section, which is precondition for forming a mechanically stable bond. After the first oxidative heating step, the product is then heated up to maximum firing temperature to form:
A: an amorphous layer mainly consisting of SiO₂ on the outer surface, which seals the inner cross section of the product from an further excessive, i.e. destructive oxidation of the SiC; and
B: homogenous chemical bond formation across the SiC grains with further possible crystallization processes.

The second heat cycle step can preferably be linked to an adjustment of the O₂-content of the kiln atmosphere that leads to selective reduction of polyvalent ingredients.

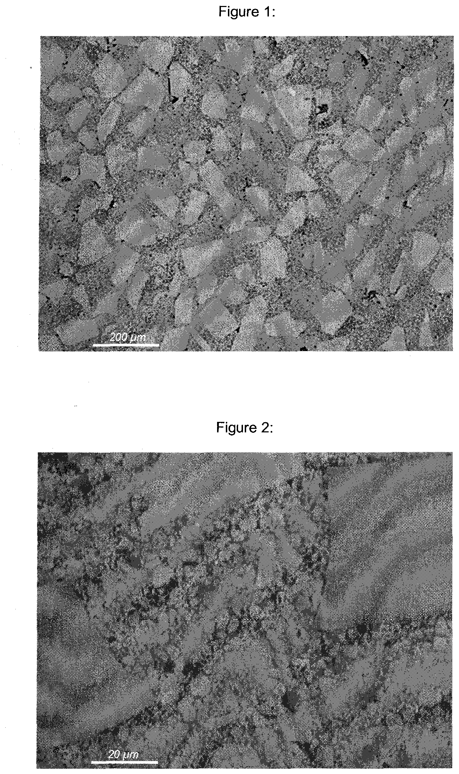

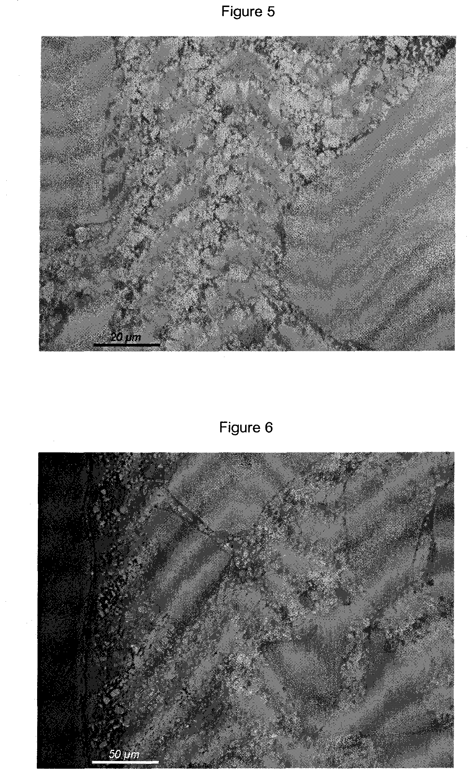

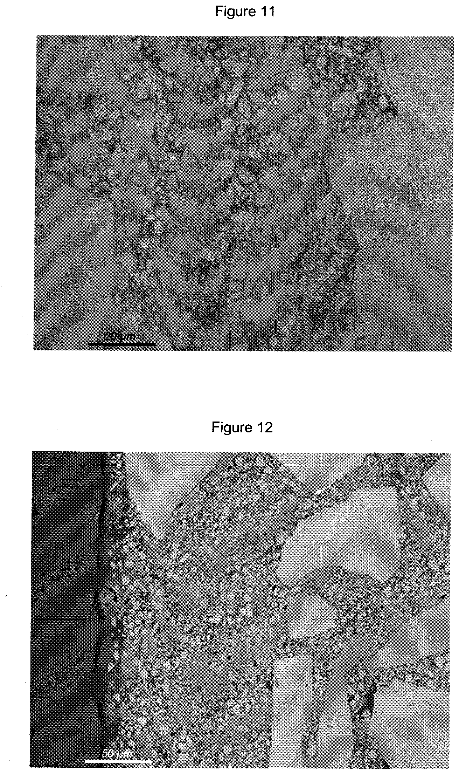

While not wishing to be bound by theory, it is believed that the use of an at least bi-modular particles size distribution in the green body in this invention, in which the fraction of small SiC particles in the range of 30% - 60% by weight with a d50 value in the range of 1.0 to 5.0 µm; preferably 1.0 to 3.0 µm, provides the following benefits:
A: a compact very fine grained bonding matrix of 30%-60% by weight that leads of a very gradual and well controllable SiO2 bonding in the micron- and submicron level of the fine SiC grains, in which furthermore the coarse SiC grains are embedded without any direct contacts between the coarse particles (Fig. 1-12). This bonding matrix, which consists of fine SiC grains, SiO2 and binding agents consisting of one or more compounds selected from the group of inorganic Vanadium compounds, Yttrium oxide (Y₂O₃), Yttrium alumina compositions, Yttrium Aluminium Garnet (YAG), Yttrium Silicates compositions, Yttrium Alumina Silica compositions, Alumina Silicate compositions, Magnesia Alumina compositions, Magnesia Alumina Spinel compositions, Silica, has a fine porosity in its microstructure (Fig. 1-12), which is believed to be capable of compensating for thermomechanical stresses arising from thermo-cycles arising form use as a kiln furniture. By using high purity SiC and high purity sinter additives as described herein, the resultant oxidation of the fine grained SiC particle surfaces is also of high purity, which leads to a very low amorphous phase content and thus to an extremely high creep resistance under load and high temperature.
B: a slip composition that is especially well suited for use in slip casting processes such as traditional casting, low pressure casting and high pressure casting that is a slip with a low viscosity but low water contents combined, with a highly stable rheological properties. This provides advantages when producing complex shaped and thin walled kiln furniture such as light weight H-cassette for heavy clay products or duo-setters for table ware. Here the wall thicknesses can be in the range but not limited of 8mm or 7mm or 6mm or 5mm or 4mm or 3mm.

### Experimental Section

### A. Methods and Equipment

Viscosity of the slurries was measured with GALLENKAMP torsion viscometer VHA-200-M, using a torsion wire 30 SWG and a cylinder ¼".

Density and Porosity and Water Absorption were determined according to EN 993-1.

MOR was measured on samples 150 x 20 x 8 mm with as fired surface as 3-points bending test with a span of 120 mm and a load rate of 0,15 MPa/sec. Applied equipment was a METEFEM Bending Tester XP-01; type MH-1 / AS 102.

High Temperature Creep was tested on bars 150 x 20 x 8 mm. The samples are supported on each end in a distance of 125 mm.
The samples are loaded on top on two points, being 62,5 mm apart, with a weight corresponding to a stress of 10 MPa. The actual load in grams is calculated for each piece on base of actual sizes of the sample bar
The loaded samples are fired with a cycle:

| | | | |
|---|---|---|---|
| heating step | 100 - 700 °C | with a heating rate of | 0,69 °C / minute |
| oxidation step | 700 - 800 °C | for | 35 h |
| heating step | 800 - 1400 °C | with a heating rate of | 0,73 °C / minute |
| soaking time | 1400 °C | for | 4 hours |
| cooling step | 1400 - 200 °C | with a cooling rate of | 1,12 °C / minute. |

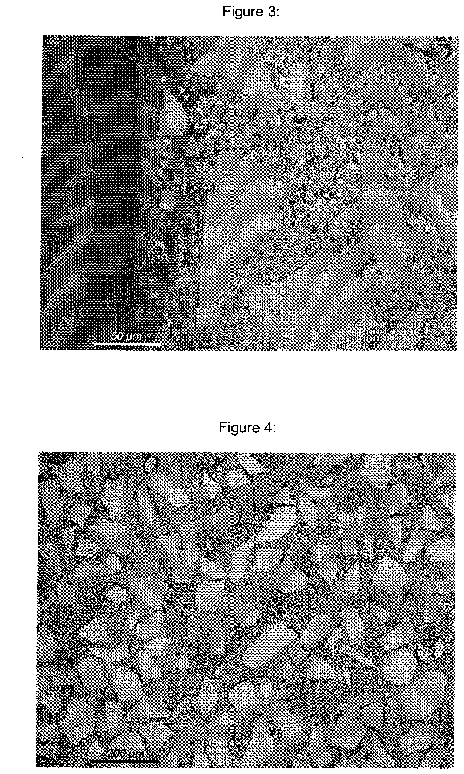

Deformation is registered as difference in flatness of the sample before and after firing. Equipment for determining the flatness is depicted in Figure 4.

Oxidation resistance was tested in a laboratory kiln with electric heating. Samples were repeatedly exposed to thermal treatment and weight gain in % was measured. The thermal treatment comprised the following steps:

| | | | |
|---|---|---|---|
| heating step | 100 - 1330 °C | with a heating rate of | 3,1 °C / minute; |
| soaking time | 1330 °C | for | 3 hours; |
| cooling step | 1330 - 100 °C | with a cooling rate of | 4,1 °C / minute. |

Thermal Expansion was measured with Netsch Dilatometer 402 E using a heating rate of 10 °C/ min. Sample holder was Al₂O₃.

Phase analysis was executed with JEOL x-ray diffraction equipment, type JDX-8S, phases were analyzed by using software XDB (powder diffraction phase analytical system).

### B. Examples

The present invention is further illustrated by the examples below.

### Slurry Preparation:

Slurry preparation is done in lot sizes of 6 kg. Water and deflocculants are mixed. The components forming the binding agents are added, and the mixture is homogenized for 15 minutes. The fine fraction of SiC powder is added, and the slurry is homogenized for 1 hour. The coarse fraction of SiC powder is added, and the slurry is again homogenized for 1 hour. Before casting the slurry is kept for 24 hours under slow stirring.

### Casting:

Shaping of the samples is done as traditional casting in plaster moulds. Samples casted are bars with a size of 150 x 20 x 8 mm. After setting time of ca. 60 minutes the green bars are taken out of the mould. The samples are dried in air for 2 hours and after this placed into a dryer at 110 °C for 3 hours.

### Firing:

Firing is done in a gas kiln with the cycle:

| | | | |
|---|---|---|---|
| heating step | 100 - 700 °C | heating rate of 0,69 °C / minute, | O₂: 6-10% |
| oxidation step | 700 - 800 °C | for 35 h; | O₂: 6-10% |
| heating step | 800-1300°C | heating rate of 0,73 °C / minute, reduction of O₂, | O₂: 4-8% |
| heating step | 1300 -1410 °C | heating rate of 0,73 °C / minute; | CO: 1-2,5% |
| soaking time | 1410 °C | for 4 hours; | CO: 1-2,5% |
| cooling step | 1300 - 200 °C | with a cooling rate of 1,12 °C / minute. | O₂: 20-21% |

A total of 15 Examples was prepared. The exact composition of the slurries used for the examples can be derived from Table 1. The properties of the resulting ceramic materials are summarized in Tables 2 and 3, respectively.

The inner micro-structure of the ceramic materials according to the present invention are depicted in Figures 1-12. Figures 1 to 3 show sections through a sample of ceramic material of the invention having the composition of Example No. 8 (Y 4; see Tables 1-3). In Figures 1 and 2, the bimodal size distribution of the SiC particles in the matrix is clearly visible. Figure 3 shows the section through an edge of the ceramic sample, where the amorphous layer on the outside of the ceramic material can be seen.

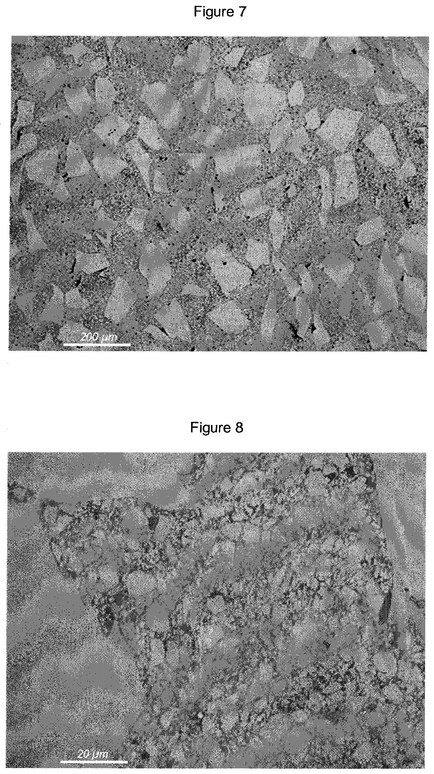

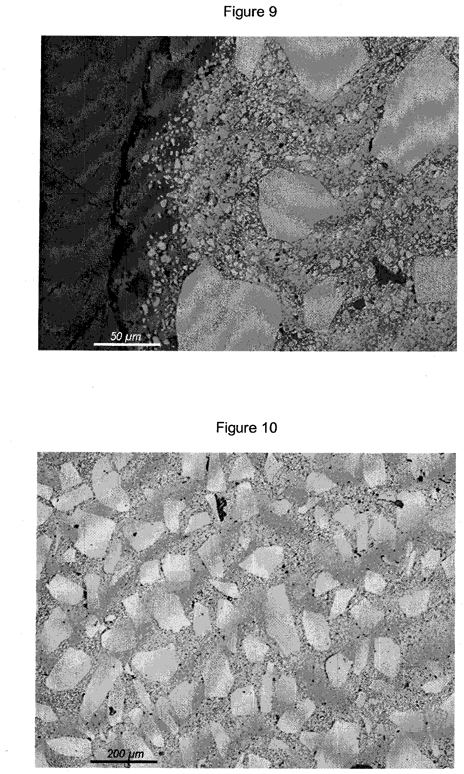

The same structural features as described above are also present in ceramic materials having the composition of Examples Nos. 9, 10, and 11. Figures 4 to 6 show sections through a sample of ceramic material of the invention having the composition of Example No. 9 (Sp2 V; see Tables 1-3). Figures 7 to 9 show sections through a sample of ceramic material of the invention having the composition of Example No. 10 (713/1; see Tables 1-3). Figures 10 to 12 show sections through a sample of ceramic material of the invention having the composition of Example No. 11 (713/3; see Tables 1-3).

The material properties described above illustrate that the inventive material is suitable for use in demanding high temperature and chemical stress applications such as kiln furniture and linings for furnaces used in the firing of tableware, sanitary ware, heavy clay products and the like.

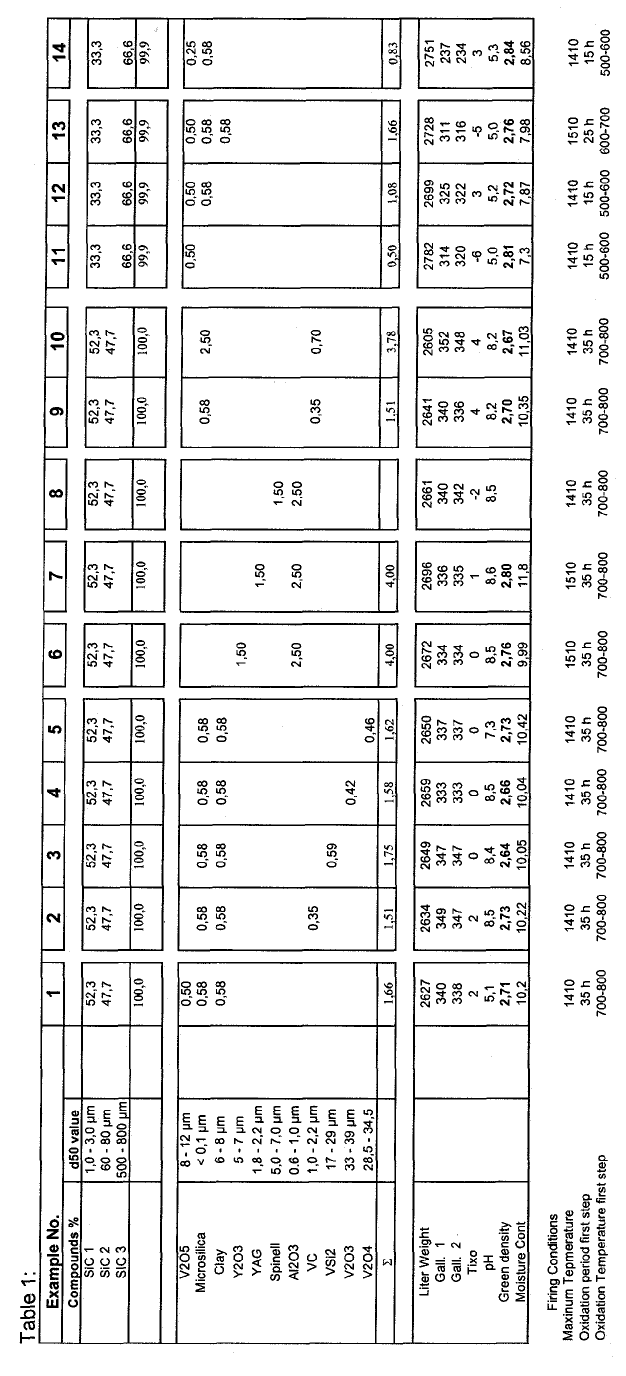

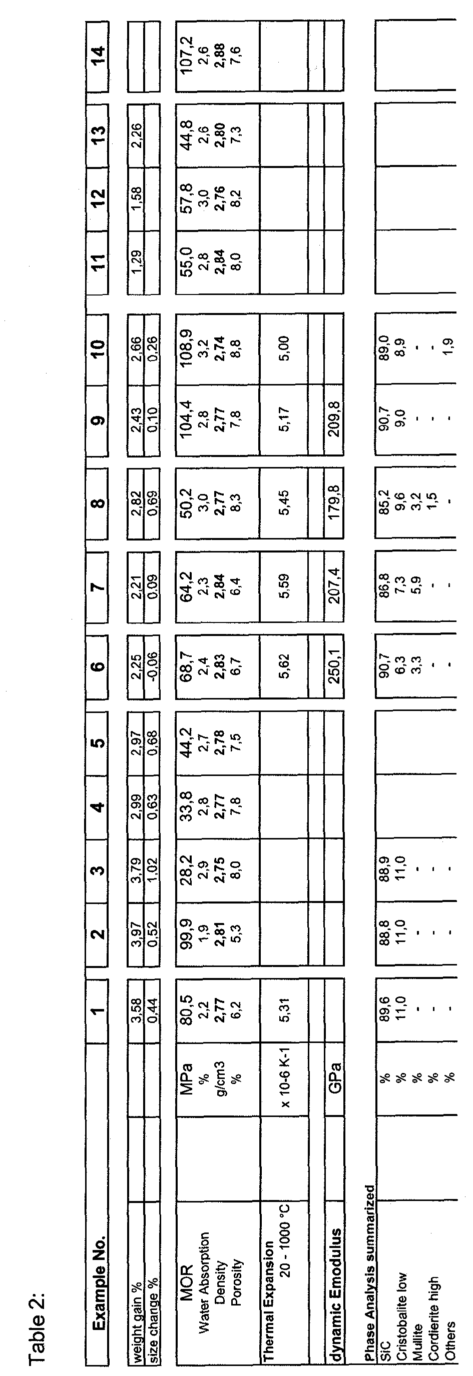

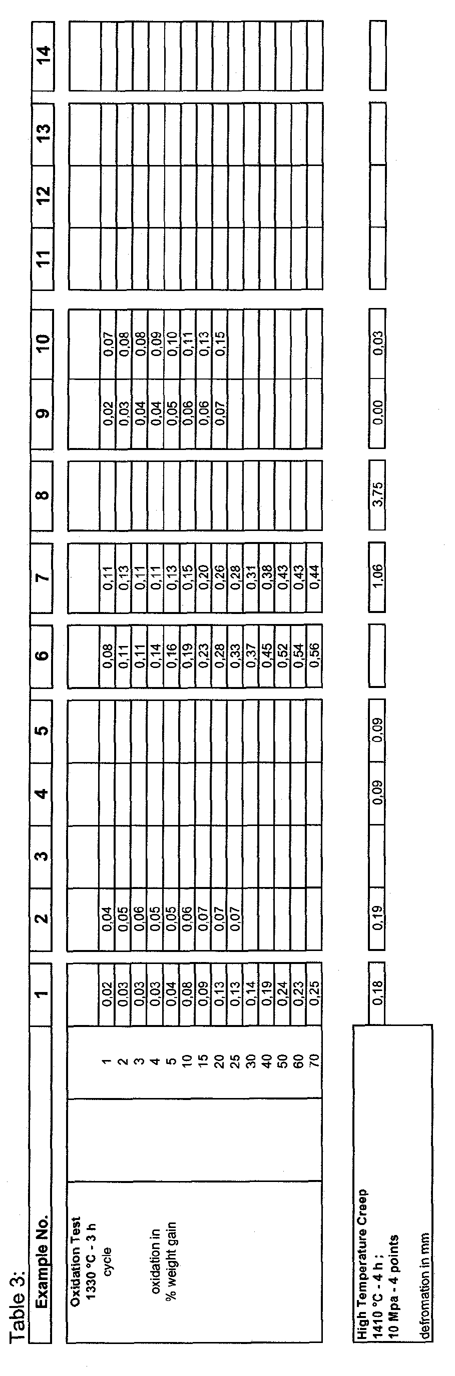

## Claims

1. A silicon carbide (SiC) ceramic material, **characterized in that** the ceramic material comprises silicon carbide grains and one or more oxide binding phase(s), wherein the silicon carbide is present in an amount of at least 70 % by weight, preferably at least 80 % by weight, more preferably in a range between 80 and 95 % by weight, based on the total weight of the ceramic material, and wherein the size distribution of the silicon carbide grains is at least bimodal with at least one fraction of small SiC grains and at least one fraction of large, non-aggregated SiC grains, wherein the coarse grain SiC portion represents 70% to 40% by weight of the composition, and wherein the oxide binding phase(s) comprise an amount of cristobalite in the range between 5 and 25 % by weight based on the total weight of the ceramic material.

2. The ceramic material of claim 1, wherein the average grain size of the small SiC grains is in the range between 0.5 micrometers to 6 micrometers, preferably 1.0 to 5.0 µm; more preferably 1.0 to 3.0 µm.

3. The ceramic material of claim 1 or 2, wherein the average grain size of the large SiC particles is in the range between 50 to 800 micrometers, preferably 50 to 100 µm, more preferably 60 to 80 µm; or is in the range of preferably 500 to 800 µm; more preferably 600 to 700 µm.

4. The ceramic material according to any one of the preceding claims, wherein the oxide binding phase(s) comprise an amount of cristobalite in the range between 5 and 15 % by weight, based on the total weight of the ceramic material.

5. The ceramic material according to any one of the preceding claims, wherein the oxide binding phase(s) further contain one or more elements selected from the group consisting of aluminum, magnesium, yttrium, and vanadium.

6. The ceramic material according to any one of the preceding claims, **characterized in that** the modulus of rupture (MOR) of the material is in the range between 25 to 200 MPa, preferably between 60 to 170 MPa, more preferably between 80 to 150 MPa.

7. The ceramic material according to any one of the preceding claims, **characterized in that** the thermal creep resistance of the material is in the range between 0.01 to 4 mm, preferably between 0.01 and 1 mm, more preferably between 0.01 and 0.2 mm.

8. The ceramic material according to any one of the preceding claims, **characterized in that** the thermal expansion coefficient from RT to 1000°C is in the range between 4 x 10⁻⁶ K⁻¹ and 6 x 10⁻⁶ K⁻¹

9. The ceramic material according to any one of the preceding claims, **characterized in that** the fine grain SiC portion represents 30% to 60% by weight of the composition.

10. A process for the manufacture of a silicon carbide ceramic material of claim 1, **characterized in that**
a) a mixture of silicon carbide particles having an at least bimodal particle size distribution with at least one fraction of small SiC particles and at least one fraction of large, non-aggregated SiC particles is provided, wherein the coarse grain SiC portion represents 70% to 40% by weight of the composition;
b) the mixture of step a) is combined with a binding agent consisting of one or more compounds selected from the group of inorganic Vanadium compounds, Yttrium oxide (Y₂O₃), Yttrium alumina compositions, Yttrium Aluminum Garnet (YAG), Yttrium Silicates compositions, Yttrium Alumina Silica compositions, Alumina Silicate compositions, Magnesia Alumina compositions, Magnesia Alumina Spinel compositions, Silica, wherein the binding agents are present in a total amount between 0.1 % by weight and 10 % by weight of the dry composition;
c) the composition is subjected to a forming step to obtain a green ceramic body;
d) the green ceramic body is subjected to a firing cycle comprising a sequence of firing steps, wherein a first firing step is conducted in the presence of an oxygen containing atmosphere.

11. The process according to claim 10, wherein the forming step comprises slip casting.

12. The process according to claim 10, wherein the firing cycle comprises two or more firing steps.

13. The process according to claim 10, wherein the atmosphere of the first firing step comprises an amount of gaseous oxygen between 6 and 10 % by volume.

14. The process according to claim 10, wherein the first firing step is performed in the temperature range between room temperature to 1300 °C preferably with an extended oxidation period between 500 - 1000°C.

15. The process according to claim 12, wherein the second firing step is performed at a temperature in the range between 1200 to 1550 °C preferably 1300 to 1450 °C.

16. The process according to claim 10 and claim 15, wherein the second firing step is performed at a temperature in the range between 1200 to 1550 °C preferably 1300 to 1450 °C, in which the atmosphere comprises an amount of carbon monoxide of 1 - 2.5% by volume.

17. The process according to claim 10, wherein the fraction of small SiC particles has a d50 value in the range of 1.0 to 5.0 µm; preferably 1.0 to 3.0 µm and represent 30-60% by weight in the total composition.

18. The process according to claim 10, wherein the fraction of large SiC particles has a d50 value in the range of 50 to 100 µm, preferably 60 to 80 µm; or in the range of 500 to 800 µm, preferably 600 to 700 µm and represent 70-40% by weight in the composition.

19. A kiln furniture product for the firing of tableware comprising a silicon carbide (SiC) ceramic material according to claim 1.

20. A kiln furniture product for the firing of heavy clay products comprising a silicon carbide (SiC) ceramic material according to claim 1.

21. A kiln furniture product for the firing of sanitary ware products comprising a silicon carbide (SiC) ceramic material according to claim 1.

22. A composite ceramic body comprising an oxide bonded silicon carbide core surrounded by an outer protective layer comprising SiO₂, said oxide bonded silicon carbide core comprising a silicon carbide (SiC) ceramic material according to claim 1.

## Patentansprüche

1. Siliciumcarbid- (SiC-) Keramikmaterial, **dadurch gekennzeichnet, dass** das Keramikmaterial Siliciumcarbidkörner und eine oder mehr Oxidbindungsphase(n) umfasst, wobei das Siliciumcarbid in einer Menge von mindestens 70 Gew.-%, bevorzugt mindestens 80 Gew.-%, noch bevorzugter in einem Bereich zwischen 80 und 95 Gew.-%, auf das Gesamtgewicht des Keramikmaterials bezogen, vorliegt und wobei die Größenverteilung der Siliciumcarbidkörner mindestens bimodal mit mindestens einer Fraktion kleiner SiC-Körner und mindestens einer Fraktion großer, nicht aggregierter SiC-Körner ist, wobei der grobe Körner- SiC-Anteil 70 bis 40 Gew.-% der Zusammensetzung darstellt und wobei die Oxidbindungsphase(n) eine Menge an Cristobalit im Bereich zwischen 5 und 25 Gew.-%, auf das Gesamtgewicht des Keramikmaterials bezogen, umfasst/umfassen.

2. Keramikmaterial nach Anspruch 1, wobei die durchschnittliche Korngröße der kleinen SiC-Körner im Bereich zwischen 0,5 Mikrometern bis 6 Mikrometern, bevorzugt 1,0 bis 5,0 *µ*m, noch bevorzugter 1,0 bis 3,0 *µ*m liegt.

3. Keramikmaterial nach Anspruch 1 oder 2, wobei die durchschnittliche Korngröße der großen SiC-Teilchen im Bereich zwischen 50 bis 800 Mikrometern, bevorzugt 50 bis 100 *µ*m, noch bevorzugter 60 bis 80 *µ*m liegt; oder im Bereich von bevorzugt 500-800 *µ*m, noch bevorzugter 600 bis 700 *µ*m liegt.

4. Keramikmaterial nach irgendeinem der vorhergehenden Ansprüche, wobei die Oxidbindungsphase(n) eine Menge an Cristobalit im Bereich zwischen 5 und 15 Gew.-%, auf das Gesamtgewicht des Keramikmaterials bezogen, umfasst

5. Keramikmaterial nach irgendeinem der vorhergehenden Ansprüche, wobei die Oxidbindungsphase(n) ferner ein oder mehrere Elemente enthält ausgewählt aus der Gruppe bestehend aus Aluminium, Magnesium, Yttrium und Vanadium.

6. Keramikmaterial nach irgendeinem der vorhergehenden Ansprüche, **dadurch gekennzeichnet, dass** der Bruchmodul (BM) des Materials im Bereich zwischen 25 bis 200 MPa, bevorzugt zwischen 60 bis 170 MPa, noch bevorzugter zwischen 80 bis 150 MPa liegt.

7. Keramikmaterial nach irgendeinem der vorhergehenden Ansprüche, **dadurch gekennzeichnet, dass** der Wärmekriechwiderstand des Materials im Bereich zwischen 0,01 bis 4 mm, bevorzugt zwischen 0,01 und 1 mm, noch bevorzugter zwischen 0,01 und 0,2 mm liegt.

8. Keramikmaterial nach irgendeinem der vorhergehenden Ansprüche, **dadurch gekennzeichnet, dass** der Wärmeausdehnungskoeffizient von der RT bis 1000 °C im Bereich zwischen 4 x 10⁻⁶ K⁻¹ und 6 x 10⁻⁸ K⁻¹ liegt.

9. Keramikmaterial nach irgendeinem der vorhergehenden Ansprüche, **dadurch gekennzeichnet, dass** der feinkörnige SiC-Anteil 30 bis 60 Gew.-% der Zusammensetzung darstellt.

10. Verfahren zur Herstellung eines Siliciumcarbidmaterials nach Anspruch 1, **dadurch gekennzeichnet, dass**
a) eine Mischung von Siliciumcarbidteilchen, die eine mindestens bimodale Teilchengrößenverteilung mit mindestens einer Fraktion kleiner SiC-Teilchen und mindestens einer Fraktion großer, nicht aggregierter SiC-Teilchen aufweisen, bereitgestellt wird, wobei der grobkörnige SiC-Anteil 70 bis 40 Gew.-% der Zusammensetzung darstellt;
b) die Mischung aus Schritt a) mit einem Bindemittel kombiniert wird, das aus einer oder mehreren Verbindungen besteht ausgewählt aus der Gruppe von anorganischen Vanadiumverbindungen, Yttriumoxid (Y₂O₃), Yttrium-Aluminiumoxid-Zusammensetzungen, Yttrium-Aluminium-Granat (YAG), Yttriumsilicatzusammensetzungen, Yttrium-Aluminiumoxid-Siliciumdioxid-Zusammensetzungen, Aluminiumoxid-Silicat-Zusammensetzungen, Magnesiumoxid-Aluminiumoxid-Zusammensetzungen, Magnesium-Aluminium-Spinell-Zusammensetzungen, Siliciumdioxid, wobei die Bindungsmittel in einer Gesamtmenge zwischen 0,1 Gew.-% und 10 Gew.-% der trockenen Zusammensetzung vorliegen;
c) die Zusammensetzung einem Gestaltungsschritt unterworfen wird, um einen grünen Keramikkörper zu erhalten;
d) der grüne Keramikkörper einem Brennzyklus unterworfen wird umfassend eine Reihenfolge von Brennschritten, wobei ein erster Brennschritt in Gegenwart einer sauerstoffhaltigen Atmosphäre ausgeführt wird.

11. Verfahren nach Anspruch 10, wobei der Gestaltungsschritt Schlickergießen umfasst.

12. Verfahren nach Anspruch 10, wobei der Brennzyklus zwei oder mehr Brennschritte umfasst.

13. Verfahren nach Anspruch 10, wobei die Atmosphäre des ersten Brennschritts eine Menge an gasförmigen Sauerstoff zwischen 6 und 10 Volumen-% umfasst.

14. Verfahren nach Anspruch 10, wobei der erste Brennschritt im Temperaturbereich zwischen Raumtemperatur bis 1300 °C bevorzugt mit einer verlängerten Oxidationsperiode zwischen 500 - 1000 °C ausgeführt wird.

15. Verfahren nach Anspruch 12, wobei der zweite Brennschritt bei einer Temperatur im Bereich zwischen 1200 bis 1550 °C, bevorzugt 1300 bis 1450 °C ausgeführt wird.

16. Verfahren nach Anspruch 10 und Anspruch 15, wobei der zweite Brennschritt bei einer Temperatur im Bereich zwischen 1200 bis 1550 °C, bevorzugt 1300 bis 1450 °C durchgeführt wird, wobei die Atmosphäre eine Menge an Kohlenmonoxid von 1 - 2,5 Volumen-% umfasst.

17. Verfahren nach Anspruch 10, wobei die Fraktion kleiner SiC-Teilchen einen d50-Wert im Bereich von 1,0 bis 5,0 *µ*m, bevorzugt 1,0 bis 3,0 *µ*m aufweist und 30 - 60 Gew.-% in der gesamten Zusammensetzung darstellt.

18. Verfahren nach Anspruch 10, wobei die Fraktion großer SiC-Teilchen einen d50-Wert im Bereich von 50 bis -100 *µ*m, bevorzugt 60 bis 80 *µ*m oder im Bereich von 500 bis 800 *µ*m, bevorzugt 600 bis 700 *µ*m aufweist und 70 - 40 Gew.-% in der Zusammensetzung darstellt.

19. Brennhilfsmittelprodukt zum Brennen von Essgeschirr, umfassend ein Siliciumcarbid- (SiC-) Keramikmaterial nach Anspruch 1.

20. Brennhilfsmittelprodukt zum Brennen von Grobkeramikprodukten, umfassend ein Siliciumcarbid-(SiC-) Keramikmaterial nach Anspruch 1.

21. Brennhilfsmittelprodukt zum Brennen von Sanitärkeramikprodukten, umfassend Siliciumcarbid-(SiC-) Keramikmaterial nach Anspruch 1.

22. Verbundkeramikkörper umfassend einen mit oxidgebundenen Siliciumcarbidkern, der durch eine äußere Schutzschicht umgeben ist, die SiO₂ umfasst, wobei der mit oxidgebundenen Siliciumcarbidkern ein Siliciumcarbid-(wurde sorgfältig SiC-) Keramikmaterial nach Anspruch 1 umfasst.

## Revendications

1. Matériau céramique en carbure de silicium (SiC), **caractérisé en ce que** le matériau céramique comprend des grains de carbure de silicium et une ou plusieurs phases liantes d'oxyde, dans lequel le carbure de silicium est présent en une quantité d'au moins 70 % en poids, de préférence d'au moins 80 % en poids, mieux encore située dans la plage comprise entre 80 et 95 % en poids, par rapport au poids total du matériau céramique, et dans lequel la distribution de taille des grains de carbure de silicium est au moins bimodale avec au moins une fraction de petits grains de SiC et au moins une fraction de gros grains non agrégés de SiC, dans lequel la partie de SiC à grains grossiers représente 70 % à 40 % en poids de la composition, et dans lequel le ou les phases liantes d'oxyde comprennent une quantité de cristobalite située dans la plage comprise entre 5 et 25 % en poids par rapport au poids total du matériau céramique.

2. Matériau céramique selon la revendication 1, dans lequel la granulométrie moyenne des petits grains de SiC est située dans la plage comprise entre 0,5 micromètre et 6 micromètres, de préférence entre 1,0 et 5,0 *µ*m, mieux encore entre 1,0 et 3,0 *µ*m.

3. Matériau céramique selon la revendication 1 ou 2, dans lequel la granulométrie moyenne des grosses particules de SiC est située dans la plage comprise entre 50 et 800 micromètres, de préférence entre 50 et 100 *µ*m, mieux encore entre 60 et 80 *µ*m ; ou est située dans la plage allant de préférence de 500 à 800 *µ*m ; mieux encore de 600 à 700 *µ*m.

4. Matériau céramique selon l'une quelconque des revendications précédentes, dans lequel la ou les phases liantes d'oxyde comprennent une quantité de cristobalite située dans la plage comprise entre 5 et 15 % en poids, par rapport au poids total du matériau céramique.

5. Matériau céramique selon l'une quelconque des revendications précédentes, dans lequel le ou les phases liantes d'oxyde contiennent en outre un ou plusieurs éléments choisis dans le groupe constitué par l'aluminium, le magnésium, l'yttrium, et le vanadium.

6. Matériau céramique selon l'une quelconque des revendications précédentes, **caractérisé en ce que** le module de rupture (MOR) du matériau est situé dans la plage comprise entre 25 et 200 MPa, de préférence entre 60 et 170 MPa, mieux encore entre 80 et 150 MPa.

7. Matériau céramique selon l'une quelconque des revendications précédentes, **caractérisé en ce que** la résistance au fluage thermique du matériau est située dans la plage comprise entre 0,01 et 4 mm, de préférence entre 0,01 et 1 mm, mieux encore entre 0,01 et 0,2 mm.

8. Matériau céramique selon l'une quelconque des revendications précédentes, **caractérisé en ce que** le coefficient de dilatation thermique de la température ambiante à 1000°C est situé dans la plage comprise entre 4 x 10⁻⁶ K⁻¹ et 6 x 10⁻⁶ K⁻¹.

9. Matériau céramique selon l'une quelconque des revendications précédentes, **caractérisé en ce que** la partie de SiC à grains fins représente 30 % à 60 % en poids de la composition.

10. Procédé pour la fabrication d'un matériau céramique en carbure de silicium selon la revendication 1, **caractérisé en ce que**
a) un mélange de particules de carbure de silicium ayant une distribution de granulométrie au moins bimodale avec au moins une fraction de petites particules de SiC et au moins une fraction de grosses particules non agrégées de SiC est obtenu, la partie de SiC à grains grossiers représentant 70 % à 40 % en poids de la composition ;
b) le mélange de l'étape a) est combiné avec un agent liant constitué d'un ou plusieurs composés choisis dans le groupe comprenant les composés inorganiques du vanadium, l'oxyde d'yttrium (Y₂O₃), les composés d'yttrium-alumine, le grenat d'yttrium-aluminium (YAG), les compositions de silicates d'yttrium, les compositions d'yttrium-alumine-silice, les compositions de silicate d'aluminium, les compositions de magnésie-alumine, les compositions de spinelle de magnésie-alumine, les agents liants étant présents en une quantité totale comprise entre 0,1 % en poids et 10 % en poids de la composition sèche ;
c) la composition est soumise à une étape de façonnage pour que soit obtenu un corps céramique cru ;
d) le corps céramique cru est soumis à un cycle de cuisson comprenant une séquence d'étapes de cuisson, la première étape de cuisson étant effectuée en présence d'une atmosphère contenant de l'oxygène.

11. Procédé selon la revendication 10, dans lequel l'étape de façonnage comprend une coulée en barbotine.

12. Procédé selon la revendication 10, dans lequel le cycle de cuisson comprend deux ou plus de deux étapes de cuisson.

13. Procédé selon la revendication 10, dans lequel l'atmosphère de la première étape de cuisson comprend une quantité d'oxygène gazeux comprise entre 6 et 10 % en volume.

14. Procédé selon la revendication 10, dans lequel la première étape de cuisson est effectuée à une température située dans la plage comprise entre la température ambiante et 1300°C, de préférence avec une période d'oxydation étendue entre 500 et 1000°C.

15. Procédé selon la revendication 12, dans lequel la deuxième étape de cuisson est effectuée à une température située dans la plage comprise entre 1200 et 1550°C, de préférence entre 1300°C et 1450°C.

16. Procédé selon la revendication 10 et la revendication 15, dans lequel la deuxième étape de cuisson est effectuée à une température située dans la plage comprise entre 1200 et 1550°C, de préférence entre 1300 et 1450°C, étape dans laquelle l'atmosphère comprend une quantité de monoxyde de carbone de 1 à 2,5 % en volume.

17. Procédé selon la revendication 10, dans lequel la fraction de petites particules de SiC a une valeur d50 située dans la plage allant de 1,0 à 5,0 *µ*m, de préférence de 1,0 à 3,0 *µ*m, et représente 30 à 60 % en poids de la composition totale.

18. Procédé selon la revendication 10, dans lequel la fraction de grosses particules de SiC a une valeur d50 située dans la plage allant de 50 à 100 *µ*m, de préférence de 60 à 80 *µ*m ; ou dans la plage allant de 500 à 800 *µ*M, de préférence de 600 à 700 *µ*m, et représente 70 à 40 % en poids de la composition.

19. Produit accessoire d'enfournement pour la cuisson de vaisselle comprenant un matériau céramique en carbure de silicium (SiC) selon la revendication 1.

20. Produit accessoire d'enfournement pour la cuisson de produits céramiques de bâtiment comprenant un matériau céramique en carbure de silicium (SiC) selon la revendication 1.

21. Produit accessoire d'enfournement pour la cuisson de produits sanitaires comprenant un matériau céramique en carbure de silicium (SiC) selon la revendication 1.

22. Corps céramique composite comprenant un coeur en carbure de silicium à liaison oxyde entouré par une couche protectrice extérieure comprenant du SiO₂, ledit coeur en carbure de silicium à liaison oxyde comprenant un matériau céramique en carbure de silicium (SiC) selon la revendication 1.
